# EUROPEAN PATENT APPLICATION

(11) **EP 1 689 187 A1**
(43) Date of publication of application: **09.08.2006**
(21) Application number: 05023078.8
(22) Date of filing: 21.10.2005
(51) Int. Cl.: H04N 7/26, H04N 7/50

(54) **Method and system for video compression and decompression (CODEC) in a microprocessor**

(30) Priority: 07.02.2005 US 53001
(71) Applicant: Broadcom Corporation, Irvine, CA 92618-7013 (US)
(72) Inventor: Lu, Paul Yang, Los Altos CA 94024 (US); Pan, Weiping, San Jose CA 95118 (US)
(74) Representative: Jehle, Volker Armin

(57) **Abstract**

Methods and systems for on-chip processing of video data are disclosed herein. In one aspect of the method, a plurality of lines in a current video frame may be received on a chip. A portion of a plurality of previously processed video frames, occurring prior to the plurality of lines in the current video frame, may be stored in a first memory outside the chip. A portion of the received plurality of lines in the current video frame may be stored in a memory on the chip. A first portion of the received plurality of lines in the current video frame may be encoded on the chip utilizing the stored portion of the previously processed video frames. The stored portion of the received plurality of lines in the current video frame may be converted to YUV format.

## Description

### CROSS-REFERENCE TO RELATED APPLICATIONS/INCORPORATION BY REFERENCE

This application is related to the following applications:
U.S. Patent Application Serial No. _______ (Attorney Docket No. 16036US01), filed February 07, 2005, and entitled "Method And System For Image Processing In A Microprocessor For Portable Video Communication Device";
U.S. Patent Application Serial No. _(Attorney Docket No. 16094US01), filed February 07, 2005, and entitled "Method And System For Encoding Variable Length Code (VLC) In A Microprocessor";
U.S. Patent Application Serial No. _(Attorney Docket No. 16471US01), filed February 07, 2005, and entitled "Method And System For Decoding Variable Length Code (VLC) In A Microprocessor"; and
U.S. Patent Application Serial No. _ (Attorney Docket No. 16232US02), filed February 07, 2005, and entitled "Method And System For Video Motion Processing In A Microprocessor."

The above stated patent applications are hereby incorporated herein by reference in their entirety.

### BACKGROUND OF THE INVENTION

Video compression and decompression techniques, as well as different picture size standards, are utilized by conventional video processing systems during recording, transmission, storage, and playback of video information. For example, common intermediate format (CIF) and video graphics array (VGA) format are utilized for high quality playback and recording of video information, such as camcorder and video clips. The CIF format is an option provided by the ITU-T's H.261/Px64 standard. It produces a color image of 288 non-interlaced luminance lines, each containing 352 pixels. The VGA format supports a resolution of 640 x 480 pixels and is a commonly used size for displaying video information with a personal computer. The frame rate of high quality video can be up to 30 frames per second (fps).

Conventional video processing systems for high quality playback and recording of video information, such as the video processing systems implementing the CIF and/or the VGA formats, utilize video encoding and decoding techniques to compress video information during transmission, or for storage, and to decompress elementary video data prior to communicating the video data to a display. The video compression and decompression techniques, such as motion processing, discrete cosine transformation, and variable length coding (VLC), in conventional video processing systems utilize a significant part of the data transferring and processing resources of a general purpose central processing unit (CPU) of a microprocessor, or other embedded processor, during encoding and/or decoding of video data. The general purpose CPU, however, handles other real-time processing tasks, such as communication with other modules within a video processing network during a video teleconference, for example. The increased amount of computation-intensive video processing tasks and data transfer tasks executed by the CPU, and the microprocessor, in a conventional video encoding/decoding system results in a significant decrease in the video quality that the CPU can provide within the video processing network.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method for on-chip processing of video data, substantially as shown in and/or described in connection with at least one of the figures, as set forth more completely in the claims.
According to an aspect of the invention, a method for on-chip processing of video data is provided, the method comprising:
receiving on a chip, a plurality of lines in a current video frame;
storing in a first memory outside said chip, at least a portion of a plurality of previously processed video frames occurring prior to said plurality of lines in said current video frame;
storing at least a portion of said received plurality of lines in said current video frame in a memory on said chip; and
encoding on said chip, a first portion of said received plurality of lines in said current video frame utilizing said stored at least a portion of said plurality of previously processed video frames.
   Advantageously, the method further comprises converting said stored at least a portion of said received plurality of lines in said current video frame to YUV format.
   Advantageously, the method further comprises transferring a first portion of said plurality of previously processed video frames from said first memory outside said chip to said memory on said chip.
   Advantageously, the method further comprises determining at least one prediction error based on a difference between a second portion of said received plurality of lines in said current video frame and a second portion of said plurality of previously processed video frames.
   Advantageously, the method further comprises discrete cosine transforming and quantizing said determined at least one prediction error to obtain at least one quantized frequency coefficient.
   Advantageously, the method further comprises storing said at least one quantized frequency coefficient in a tightly coupled memory on said chip.
   Advantageously, the method further comprises encoding said second portion of said received plurality of lines in said current video frame based on said discrete cosine transformed and quantized said determined at least one prediction error.
   Advantageously, said encoding comprises encoding via a tightly coupled co-processor interface.
   Advantageously, the method further comprises inverse quantizing and inverse discrete cosine transforming said discrete cosine transformed and quantized said determined at least one prediction error.
   Advantageously, the method further comprises generating at least one reconstructed reference frame, based on said inverse cosine transformed and inverse quantized said discrete cosine transformed and quantized said determined at least one prediction error.
   Advantageously, the method further comprises storing said generated at least one reconstructed reference frame on a second memory outside said chip.
   According to an aspect of the invention, a method for on-chip processing of video data is provided, the method comprising:
   receiving on a chip, a plurality of encoded macroblocks in a current video frame;
   storing in a first memory outside said chip, at least a portion of a plurality of previously decoded video frames occurring prior to said plurality of encoded macroblocks in said current video frame;
   storing at least a portion of said received plurality of encoded macroblocks in said current video frame in a memory on said chip; and
   decoding on said chip, a first portion of said received plurality of encoded macroblocks in said current video frame utilizing said stored at least a portion of said plurality of previously decoded video frames.
   Advantageously, the method further comprises generating at least one quantized frequency coefficient corresponding to said decoded said first portion of said received plurality of encoded macroblocks in said current video frame.
   Advantageously, the method further comprises storing said generated at least one quantized frequency coefficient in a tightly coupled memory on said chip.
   Advantageously, the method further comprises inverse quantizing and inverse discrete cosine transforming said stored said generated at least one quantized frequency coefficient to obtain at least one prediction error.
   Advantageously, the method further comprises generating at least one reconstructed macroblock, based on said at least one prediction error and said stored at least a portion of said plurality of previously decoded video frames.
   Advantageously, the method further comprises storing said generated at least one reconstructed macroblock on a second memory outside said chip.
   Advantageously, the method further comprises converting said generated at least one reconstructed macroblock to RGB format.
   Advantageously, the method further comprises storing said converted said generated at least one reconstructed macroblock on said memory on said chip.
   Advantageously, the method further comprises communicating said stored said converted said generated at least one reconstructed macroblock to a display.
   According to an aspect of the invention, a system for on-chip processing of video data is provided, the system comprising:
   at least one processor that receives on a chip, a plurality of lines in a current video frame;
   said at least one processor stores in a first memory outside said chip, at least a portion of a plurality of previously processed video frames occurring prior to said plurality of lines in said current video frame;
   said at least one processor stores at least a portion of said received plurality of lines in said current video frame in a memory on said chip; and
   said at least one processor encodes on said chip, a first portion of said received plurality of lines in said current video frame utilizing said stored at least a portion of said plurality of previously processed video frames.
   Advantageously, said at least one processor converts said stored at least a portion of said received plurality of lines in said current video frame to YUV format.
   Advantageously, said at least one processor transfers a first portion of said plurality of previously processed video frames from said first memory outside said chip to said memory on said chip.
   Advantageously, said at least one processor determines at least one prediction error based on a difference between a second portion of said received plurality of lines in said current video frame and a second portion of said plurality of previously processed video frames.
   Advantageously, said at least one processor discrete cosine transforms and quantizes said determined at least one prediction error to obtain at least one quantized frequency coefficient.
   Advantageously, said at least one processor stores said at least one quantized frequency coefficient in a tightly coupled memory on said chip.
   Advantageously, said at least one processor encodes said second portion of said received plurality of lines in said current video frame based on said discrete cosine transformed and quantized said determined at least one prediction error.
   Advantageously, said encoding comprises encoding via a tightly coupled co-processor interface.
   Advantageously, said at least one processor inverse quantizes and inverse discrete cosine transforms said discrete cosine transformed and quantized said determined at least one prediction error.
   Advantageously, said at least one processor generates at least one reconstructed reference frame, based on said inverse cosine transformed and inverse quantized said discrete cosine transformed and quantized said determined at least one prediction error.
   Advantageously, said at least one processor stores said generated at least one reconstructed reference frame on a second memory outside said chip.
   According to an aspect of the invention, a system for on-chip processing of video data is provided, the system comprising:
   at least one processor that receives on a chip, a plurality of encoded macroblocks in a current video frame;
   said at least one processor stores in a first memory outside said chip, at least a portion of a plurality of previously decoded video frames occurring prior to said plurality of encoded macroblocks in said current video frame;
   said at least one processor stores at least a portion of said received plurality of encoded macroblocks in said current video frame in a memory on said chip; and
   said at least one processor decodes on said chip, a first portion of said received plurality of encoded macroblocks in said current video frame utilizing said stored at least a portion of said plurality of previously decoded video frames.
   Advantageously, said at least one processor generates at least one quantized frequency coefficient corresponding to said decoded said first portion of said received plurality of encoded macroblocks in said current video frame.
   Advantageously, said at least one processor stores said generated at least one quantized frequency coefficient in a tightly coupled memory on said chip.
   Advantageously, said at least one processor inverse quantizes and inverse discrete cosine transforms said stored said generated at least one quantized frequency coefficient to obtain at least one prediction error.
   Advantageously, said at least one processor generates at least one reconstructed macroblock, based on said at least one prediction error and said stored at least a portion of said plurality of previously decoded video frames.
   Advantageously, said at least one processor stores said generated at least one reconstructed macroblock on a second memory outside said chip.
   Advantageously, said at least one processor converts said generated at least one reconstructed macroblock to RGB format.
   Advantageously, said at least one processor stores said converted said generated at least one reconstructed macroblock on said memory on said chip.
   Advantageously, said at least one processor communicates said stored said converted said generated at least one reconstructed macroblock to a display.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram of an exemplary video encoding system that may be utilized in accordance with an aspect of the invention.

FIG. 1 B is a block diagram of an exemplary video decoding system that may be utilized in accordance with an aspect of the invention.

FIG. 2 is a block diagram of the exemplary microprocessor architecture for video compression and decompression utilizing on-chip accelerators, in accordance with an embodiment of the invention.

FIG. 3 illustrates architecture for exemplary on-chip and external memory modules that may be utilized in accordance with the microprocessor of FIG. 2, for example, in accordance with an embodiment of the invention.

FIG. 4 is an exemplary timing diagram illustrating video encoding via the microprocessor of FIG. 2, for example, in accordance with an embodiment of the invention.

FIG. 5 is an exemplary timing diagram illustrating video decoding via the microprocessor of FIG. 2, for example, in accordance with an embodiment of the invention.

FIG. 6 is a flow diagram of an exemplary method for compression of video information, in accordance with an embodiment of the invention.

FIG. 7 is a flow diagram of an exemplary method for decompression of video information, in accordance with an embodiment of the invention.

### DETAILED DESCRIPTION OF THE INVENTION

Aspects of the invention may be found in a method and system for on-chip processing of video data. In one aspect of the invention, computation-intensive video processing and data transfer in a video processing system for encoding/decoding of video information, such as a CIF or VGA enabled videoconferencing system, may be significantly improved by utilizing one or more hardware accelerators within the microprocessor of the video processing system. The hardware accelerators may offload most of the computation-intensive encoding and/or decoding tasks from the CPU, which may result in increased video quality the CPU may provide within the video processing network. In addition, the hardware accelerators may utilize one or more local memory modules for storing intermediate processing results during encoding and/or decoding, thus minimizing the burden on the system bus within the microprocessor and any on-chip memory, such as a level one tightly coupled memory (TCM) and/or level two on-chip memory (OCM) within the microprocessor. The OCM, for example, may be utilized to store YUV-formatted macroblock information prior to encoding and/or RGB-formatted information after decoding and prior to displaying the decoded video information.

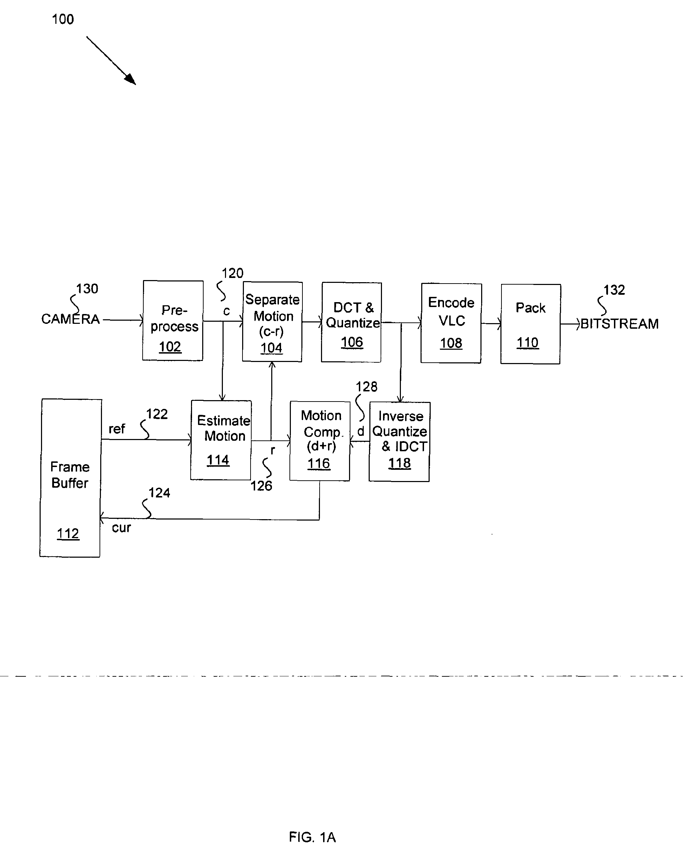

FIG. 1A is a block diagram of an exemplary video encoding system that may be utilized in accordance with an aspect of the invention. Referring to FIG. 1A, the video encoding system 100 may comprise a pre-processor 102, a motion separation module 104, a discrete cosine transformer and quantizer module 106, a variable length code (VLC) encoder 108, a bitstream packer 110, a frame buffer 112, a motion estimator 114, a motion compensator 116, and an inverse quantizer and inverse discrete cosine transformer module 118.

The pre-processor 102 comprises suitable circuitry, logic, and/or code and may be adapted to acquire video information from the camera 130 and convert the video information to a YUV format suitable for encoding. The motion estimator 114 comprises suitable circuitry, logic, and/or code and may be adapted to acquire a current macroblock and its motion search area and determine a most optimal motion reference from the acquired search area for use during motion separation and/or motion compensation, for example. The motion separation module 104 comprises suitable circuitry, logic, and/or code and may be adapted to acquire a current macroblock and its motion reference and determine one or more prediction errors based on the difference between the acquired current macroblock and its motion reference.

The discrete cosine transformer and quantizer module 106 and the inverse discrete cosine transformer and inverse quantizer module 118 comprise suitable circuitry, logic, and/or code and may be adapted to transform the prediction errors to frequency coefficients and the frequency coefficients back to prediction errors. For example, the discrete cosine transformer and quantizer module 106 may be adapted to acquire one or more prediction errors and apply a discrete cosine transform to obtain frequency coefficients and subsequently to quantize the obtained frequency coefficients. Similarly, the inverse discrete cosine transformer and inverse quantizer module 118 may be adapted to acquire one or more frequency coefficients and apply an inverse quantize and subsequently inverse discrete cosine transform the inverse quantized frequency coefficients to obtain prediction errors.

The motion compensator 116 comprises suitable circuitry, logic, and/or code and may be adapted to acquire the prediction error of a macroblock and its motion reference and reconstruct a current macroblock based on the acquired reference and prediction error. The VLC encoder 108 and the packer 110 comprise suitable circuitry, logic, and/or code and may be adapted to generate an encoded elementary video stream based on prediction motion information and/or quantized frequency coefficients. For example, prediction motion from one or more reference macroblocks may be encoded together with corresponding frequency coefficients to generate the encoded elementary bitstream.

In operation, the pre-processor 102 may acquire video data from the camera 130 and may convert the video data to YUV-formatted video data suitable for encoding. A current macroblock 120 may then be communicated to both the motion separation module 104 and the motion estimator 114. The motion estimator 114 may acquire one or more reference macroblocks 122 from the frame buffer 112 and may determine a motion reference 126 corresponding to the current macroblock 120. The motion reference 126 may then be communicated to both the motion separation module 104 and the motion compensator 116.

The motion separation module 104, having acquired the current macroblock 120 and the motion reference 126, may generate a prediction error based on a difference between the reference 126 and the current macroblock 120. The generated prediction error may be communicated to the discrete cosine transformer and quantizer module 106 where the prediction error may be transformed into one or more frequency coefficients by applying a discrete cosine transformation and a quantization process. The generated frequency coefficients may be communicated to the VLC encoder 108 and the bitstream packer 110 for encoding into the bitstream 132. The bitstream 132 may also comprise one or more prediction motion references corresponding to the quantized frequency coefficients.

The frequency coefficients generated by the discrete cosine transformer and quantizer module 106 may be communicated to the inverse discrete cosine transformer and inverse quantizer module 118. The inverse discrete cosine transformer and inverse quantizer module 118 may transform the frequency coefficients back to one or more prediction errors 128. The prediction errors 128, together with the reference frame 126, may be utilized by the motion compensator 116 to generate a reconstructed current macroblock 124. The reconstructed macroblock 124 may be stored in the frame buffer 112 and may be utilized as a reference for motion estimation of macroblocks in the subsequent frame generated by the pre-processor 102.

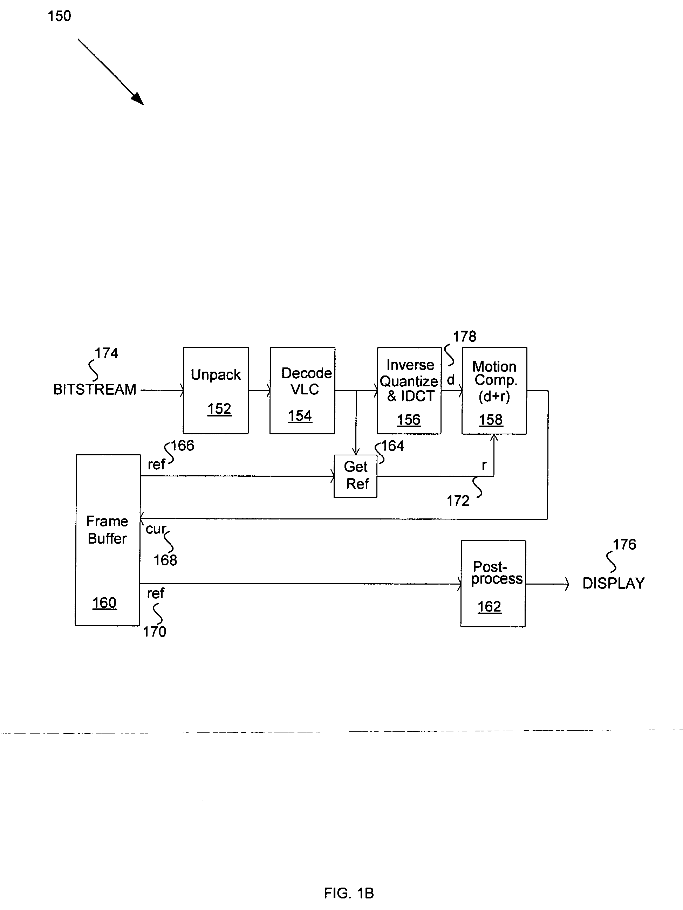

FIG. 1 B is a block diagram of an exemplary video decoding system that may be utilized in accordance with an aspect of the invention. Referring to FIG. 1 B, the VLC video decoding system 150 may comprise a bitstream unpacker 152, a VLC decoder 154, a reference-generating module 164, a frame buffer 160, an inverse discrete cosine transformer and inverse quantizer module 156, a motion compensator 158, and a post-processor 162.

The bitstream unpacker 152 and VLC decoder 154 comprise suitable circuitry, logic, and/or code and may be adapted to decode an elementary video bitstream and generate one or more quantized frequency coefficients and/or corresponding prediction errors. The inverse discrete cosine transformer and inverse quantizer module 156 comprises suitable circuitry, logic, and/or code and may be adapted to transform one or more quantized frequency coefficients to one or more prediction errors. The motion compensator 158 comprises suitable circuitry, logic, and/or code and may be adapted to acquire a prediction error and its motion reference and reconstruct a current macroblock based on the acquired reference and prediction error.

In operation, the bitstream unpacker 152 and VLC decoder 154 may decode an elementary video bitstream 174 and generate one or more quantized frequency coefficients and/or corresponding motion reference pointer. The generated quantized frequency coefficients may then be communicated to the inverse discrete cosine transformer and inverse quantizer module 156. The motion reference pointer may then be communicated to the reference-generating module 164. The reference-generating module 164 may acquire one or more reference macroblocks 166 from the frame buffer 160 and may generate the motion reference 172 corresponding to the quantized frequency coefficients. The motion reference 172 may be communicated to the motion compensator 158 for macroblock reconstruction.

The inverse discrete cosine transformer and inverse quantizer module 156 may transform the quantized frequency coefficients to one or more prediction errors 178. The prediction errors 178 may be communicated to the motion compensator 158. The motion compensator 158 may then reconstruct a current macroblock 168 utilizing the prediction errors 178 and its motion reference 172. The reconstructed current macroblock 168 may be stored in the frame buffer 160 for subsequent post-processing. For example, a reconstructed macroblock 170 may be communicated from the frame buffer 160 to the post-processor 162. The post-processor 162 may convert the YUV-formatted macroblock 170 to an RGB format and communicate the converted macroblock to the display 176 for video displaying.

Referring to FIGS. 1A and 1B, in one aspect of the invention, one or more on-chip accelerators may be utilized to offload computation-intensive tasks from the CPU during encoding and/or decoding of video data. For example, one accelerator may be utilized to handle motion related computations, such as motion estimation, motion separation, and/or motion compensation. A second accelerator may be utilized to handle computation-intensive processing associated with discrete cosine transformation, quantization, inverse discrete cosine transformation, and inverse quantization. Another on-chip accelerator may be utilized to handle pre-processing of data, such as RGB-to-YUV format conversion, and post-processing of video data, such as YUV-to-RGB format conversion. Further, one or more external memory modules may be utilized together with one or more on-chip memory modules to store video data for the CPU and the microprocessor during encoding and/or decoding.

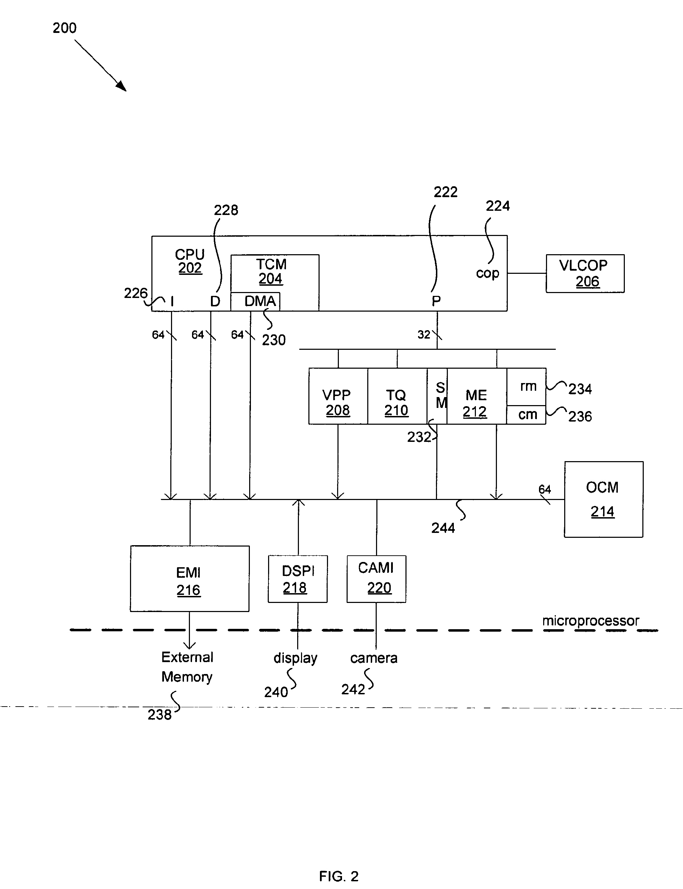

FIG. 2 is a block diagram of the exemplary microprocessor architecture for video compression and decompression utilizing on-chip accelerators, in accordance with an embodiment of the invention. Referring to FIG. 2, the exemplary microprocessor architecture 200 may comprise a central processing unit (CPU) 202, a variable length code co-processor (VLCOP) 206, a video pre-processing and post-processing (VPP) accelerator 208, a transformation and quantization (TQ) accelerator 210, a motion engine (ME) accelerator 212, on-chip shared memory 232, on-chip reference memory 234, on-chip current memory 236, an on-chip memory (OCM) 214, an external memory interface (EMI) 216, a display interface (DSPI) 218, and a camera interface (CAMI) 242. The EMI 216, the DSPI 218, and the CAMI 220 may be utilized within the microprocessor architecture 200 to access the external memory 238, the display 240, and the camera 242, respectively.

The CPU 202 may comprise an instruction port 226, a data port 228, a peripheral device port 222, a co-processor port 224, tightly coupled memory (TCM) 204, and a direct memory access (DMA) module 230. The instruction port 226 and the data port 228 may be utilized by the CPU 202 to fetch its program and the data required by the program via connections to the system bus 244 during encoding and/or decoding of video information. The peripheral device port may be utilized by the CPU 202 to send commands to the accelerators and check their status during encoding and/or decoding of video information.

The TCM 204 may be utilized within the microprocessor architecture 200 for storage and access to large amount of data without compromising the operation frequency of the CPU 202. For example, the TCM 204 may be utilized within the microprocessor architecture 200 for storage of discrete cosine transformed and quantized frequency coefficients. The DMA module 230 may be utilized in connection with the TCM 204 to ensure quick access and data transfer of information from the TCM 204 during operating cycles when the CPU 202 is not accessing the TCM 204.

The CPU 202 may utilize the co-processor port 224 to communicate with the VLCOP 206. The VLCOP 206 may be adapted to assist the CPU 202 by offloading certain encoding and/or decoding tasks. For example, the VLCOP 206 may be adapted to utilize techniques such as code table look-up and/or packing/unpacking of an elementary bitstream to assist the CPU in processing variable length coding related tasks on a cycle-by-cycle basis.

The OCM 214 may be utilized within the microprocessor architecture 200 during pre-processing and post-processing of video data during compression and/or decompression. For example, the OCM 214 may be adapted to store camera data communicated from the camera 242 via the CAMI 220 prior to conversion to YUV-formatted video data suitable for encoding. In addition, the OCM 214 may be adapted to store RGB-formatted video data and subsequent communication of such data to the video display 240 via the DSPI 218 for displaying. The OCM 214 may be accessed by the CPU 202, the VPP accelerator 208, the TQ accelerator 218, the ME accelerator 212, the EMI 216, the DSPI 218, and the CAMI 220 via the system bus 244.

The CPU 202 may utilize the peripheral device port 222 to communicate with the on-chip accelerators VPP 208, TQ 210, ME 212 via a bus connection. The VPP accelerator 208 may comprise suitable circuitry and/or logic and may be adapted to provide video data pre-processing and post-processing during encoding and/or decoding of video data within the microprocessor architecture 200. For example, the VPP accelerator 208 may be adapted to convert camera feed data to YUV-formatted video data prior to encoding. In addition, the VPP accelerator 208 may be adapted to convert decoded YUV-formatted video data to RGB-formatted video data prior to communicating the data to a video display.

The TQ accelerator 210 may comprise suitable circuitry and/or logic and may be adapted to perform discrete cosine transformation and quantization related processing of video data, including inverse discrete cosine transformation and inverse quantization. The TQ accelerator 210 may also utilize shared memory 232 together with the ME accelerator 212. The ME accelerator 212 may comprise suitable circuitry and/or logic and may be adapted to perform motion estimation, motion separation, and/or motion compensation during encoding and/or decoding of video data within the microprocessor architecture 200. In one aspect of the invention, the ME accelerator 212 may utilize on-chip reference memory 234 and on-chip current memory 236 to store reference macroblock data and current macroblock data, respectively, utilized by the ME accelerator 212 during motion estimation, motion separation, and/or motion compensation.

In another exemplary aspect of the invention, the microprocessor architecture 200 may utilize the external memory 238 to store macroblocks of the current frame and/or macroblocks of previously processed frame that may be utilized during processing of the current frame. By utilizing the VLCOP 206, the VPP accelerator 208, the TQ accelerator 210, the ME accelerator 212, as well as the reference memory 234, the current memory 236, and the shared memory 232 during encoding and/or decoding of video data, the CPU 202 may be alleviated from computation-intensive tasks during encoding and/or decoding and the OCM 214 and the external memory 216 may be alleviated from storing excessive video data during encoding and/or decoding.

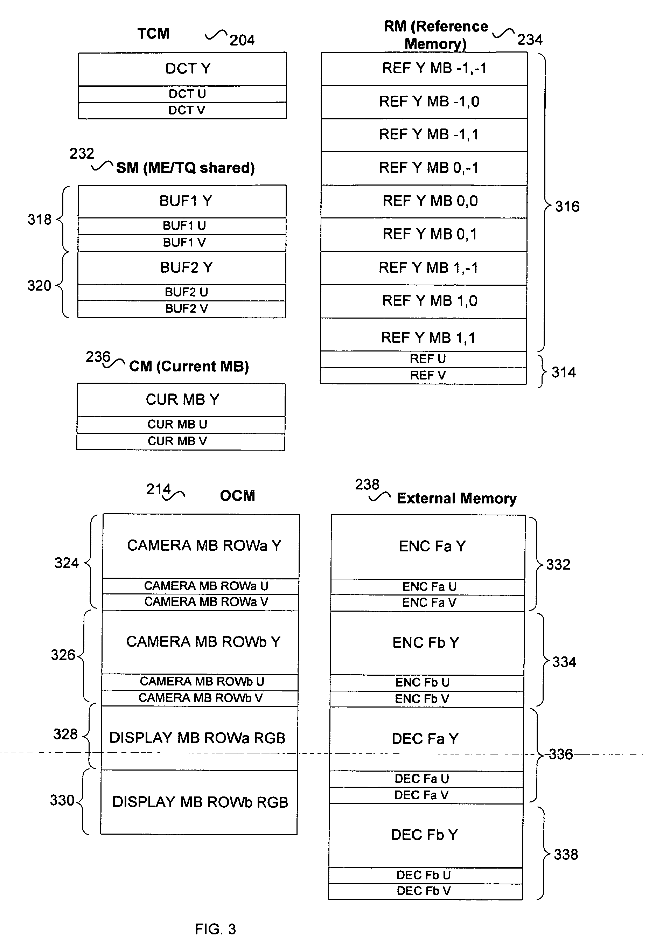

FIG. 3 illustrates architecture for exemplary on-chip and external memory modules that may be utilized in accordance with the microprocessor of FIG. 2, for example, in accordance with an embodiment of the invention. Referring to FIGS. 2 and 3, the TCM 204 may comprise one buffer and may be adapted to store quantized frequency coefficients. During decoding, the CPU 202 may generate the quantized frequency coefficients and the DMA module 230 may communicate the quantized frequency coefficients from the TCM 204 to the shared memory 232 for use by the TQ accelerator 210. During encoding, the TQ accelerator 210 may generate the quantized frequency coefficients, which may then be stored in the shared memory 232 and subsequently fetched by the DMA module 230 into the TCM 204. The CPU may then utilize the quantized frequency coefficients during generation of the VLC bitstream.

The shared memory (SM) 232 may comprise buffers 318 and 320. During decoding, buffers 318 and 320 may be adapted to store quantized frequency coefficients communicated from the CPU 202 and prediction errors communicated from the TQ accelerator 210 for use during motion compensation. During encoding, one of the buffers within the shared memory 232 may store prediction errors generated by the ME accelerator 212 during motion separation or prediction errors generated after inverse discrete cosine transformation and inverse quantization by the TQ accelerator 210. The second buffer may store quantized frequency coefficients generated by the TQ accelerator 210 prior to communicating the quantized frequency coefficients to the CPU 202.

The reference memory (RM) 234 may be adapted to store luminance (Y) information for nine reference macroblocks, or a 3x3 macroblocks search area, in a reference frame for motion estimation of a current macroblock. The reference memory 234 may also be adapted to store the chrominance (U and V) references for motion separation and motion compensation within the microprocessor architecture 200. The current memory (CM) 236 may be adapted to store the YUV information of a current macroblock utilized during motion estimation and/or motion separation. The current memory 236 may also be utilized to store the macroblock output generated from motion compensation by the ME accelerator 212.

The external memory 238 may comprise buffers 332, 334, 336, and 338. Each buffer within the external memory 238 may be adapted to store YUV information for one frame of macroblocks. Two of the four buffers may be utilized during encoding and the remaining two buffers may be utilized during decoding. Each of the two pairs of buffers may be utilized in a ping-pong fashion with one buffer holding a current frame being encoded or decoded and the other buffer holding a previous frame that may be utilized as a motion reference during encoding or decoding of the current frame. For example, buffers 332 and 334 may be utilized to hold a current frame and a previously encoded frame during an exemplary encoding operation. Similarly, buffers 336 and 338 may be utilized to hold a current frame and a previously decoded frame during an exemplary decoding operation.

The OCM 214 may comprise buffers 324, 326, 328, and 330. Buffers 324 and 326 may be adapted to store YUV-formatted data after converting video data received from the camera 242. For example, buffers 324 and 325 may be adapted to store YUV-formatted data for one row of macroblocks. One of the two buffers may be utilized by the VPP accelerator 208 to store YUV-formatted video data after conversion by the VPP accelerator 208 of the data received from the camera 242. The second buffer may be utilized by the ME accelerator 212 to read YUV-formatted data just filled, while the previous buffer is being filled by the VPP accelerator 208. The write and read buffers 324 and 326 may be swapped in a ping-pong fashion after the VPP accelerator 208 fills the write buffer.

Similarly, buffers 328 and 330 may be adapted to store RGB-formatted camera data after YUV-formatted data is converted prior to displaying by the video display 240. For example, buffers 328 and 330 may be adapted to store RGB-formatted data for one row of macroblocks. One of the two buffers may be utilized by the VPP accelerator 208 to store RGB-formatted video data after conversion by the VPP accelerator 208 of YUV-formatted data during post-processing within the microprocessor architecture 200. The second buffer may be utilized by the DSPI 218 to read RGB-formatted data for display by the video display 240, while the VPP accelerator 208 is filling the previous buffer. The write and read buffers 328 and 330 may be swapped in a ping-pong fashion after the VPP accelerator 208 fills the write buffer.

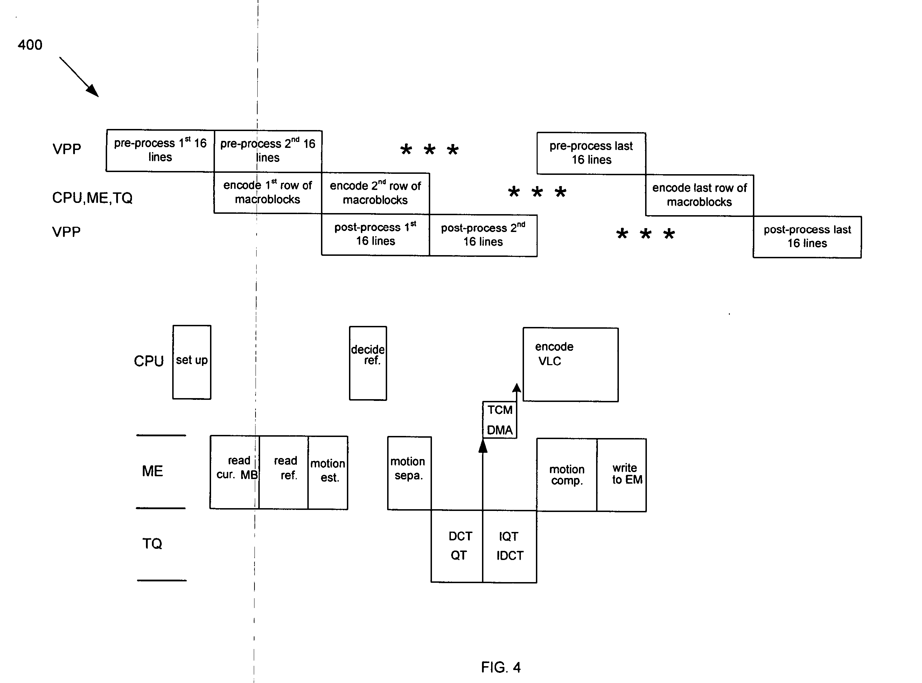

FIG. 4 is an exemplary timing diagram 400 illustrating video encoding via the microprocessor of FIG. 2, for example, in accordance with an embodiment of the invention. Referring to FIGS. 2, 3, and 4, for example, camera data may be communicated from the camera 242 to the VPP accelerator 208 via the CAMI 220 and the system bus 244. The VPP accelerator 208 may then convert the camera data to a YUV-format and store the result in buffer 324 within the OCM 214 in a line-by-line fashion. After buffer 324 is filled with YUV-formatted data, the VPP accelerator 208 may continue storing YUV-converted data in buffer 326 and buffer 324 may become the read buffer for the ME accelerator 212 to start the encoding of one row of macroblocks.

For each macroblock, the CPU 202 may first set up the microprocessor architecture 200 for encoding. The ME accelerator 212 may acquire YUV-formatted data for macroblock MB0 from buffer 324 within the OCM 214 and may store the macroblock MB0 data in the current memory 236. The ME accelerator 212 may then acquire a motion search area from a previous frame stored in buffer 332 in the external memory 238 via the EMI 216 and store the search area in buffer 316. During motion estimation, the ME accelerator 212 and the CPU 202 may compare luminance information of the current macroblock MB0 with all motion reference candidates in the search area stored in buffer 316 in reference memory 234.

After a motion reference has been selected, the ME accelerator 212 may generate one or more prediction errors during motion separation based on a difference between the current macroblock MB0 and the selected motion reference. The generated prediction errors may be stored in the shared memory 232 for subsequent processing by the TQ accelerator 210. The TQ accelerator 210 may acquire the generated prediction errors from the shared memory 232 and may discrete cosine transform and quantize the prediction errors to obtain quantized frequency coefficients. The quantized frequency coefficients may then be communicated to the TCM 204 via the DMA module 230 for storage and subsequent encoding in a VLC bitstream, for example. The quantized frequency coefficients may then be inverse quantized and inverse discrete cosine transformed by the TQ accelerator 210 to generate prediction errors. The generated prediction errors may be stored back in the shared memory 232 for subsequent utilization by the ME accelerator 212 during motion compensation.

The ME accelerator 212 may then reconstruct the current macroblock MB0 based on the motion reference information stored in the reference memory 234 and the generated prediction errors stored in the shared memory 232. After the current macroblock MB0 is reconstructed by the ME accelerator, the reconstructed macroblock MB0 may be stored in buffer 334 in the external memory 238 to be utilized as a reference macroblock during operation cycle utilizing the subsequent frame.

After quantized frequency coefficients information is stored in the TCM 204 from the shared memory 232, the CPU 202 may encode the quantized frequency coefficients into a VLC bitstream, for example. The CPU may generate the VLC bitstream with the special acceleration provided by VLCOP.

In an exemplary aspect of the invention, some of the tasks performed by the CPU 202 and the accelerators VPP 208, TQ 210, and ME 212 may be performed simultaneously and/or in a pipeline fashion to achieve faster and more efficient encoding of video data. For example, the CPU may be adapted to perform VLC encoding while the TQ 210 is performing inverse discrete cosine transformation or inverse quantization, and ME 212 is performing motion compensation and writing the reconstructed macroblock to an external memory buffer.

After the encoding of one row of macroblocks is completed, the VPP may post-process the YUV-formatted data of the row of the macroblocks to RGB-formatted data in a line-by-line fashion for display.

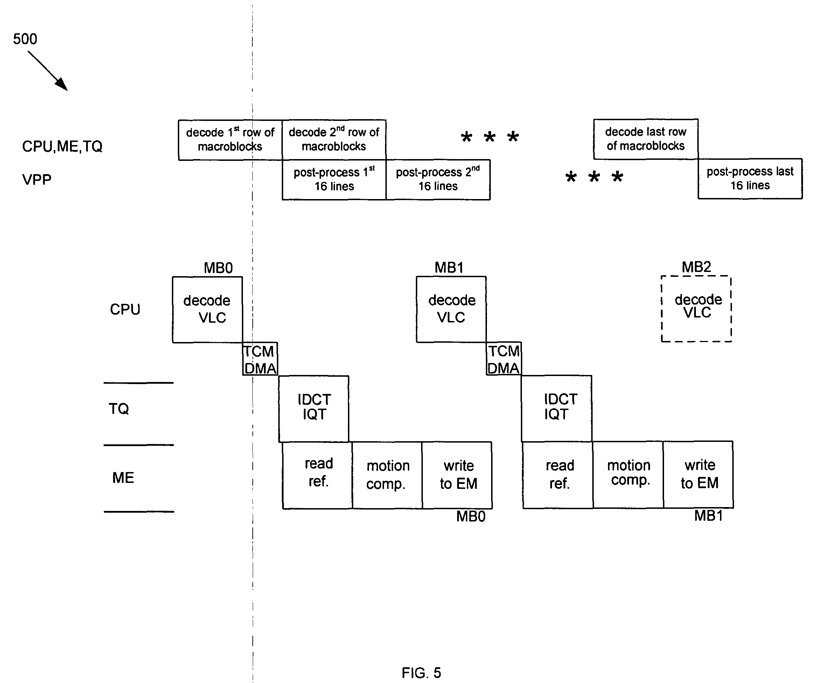

FIG. 5 is an exemplary timing diagram 500 illustrating video decoding via the microprocessor of FIG. 2, for example, in accordance with an embodiment of the invention. Referring to FIGS. 2, 3, and 5, for each macroblock MB0, the CPU 202 may first acquire a current encoded macroblock MB0 from a current frame that is encoded as an elementary video bitstream. For example, the bitstream of the current encoded frame may be stored in the external memory 238. The CPU 202 may then decode the VLC bitstream of the current macroblock MB0 and generate the motion reference of the MB0 and one or more quantized frequency coefficients. The CPU 202 may perform the VLC bitstream decoding together with a coprocessor VLCOP 206. The generated quantized frequency coefficients may be stored in the TCM 204 for subsequent communication to the shared memory 232.

After decoding of the VLC bitstream and acquiring the motion reference and the quantized frequency coefficients, the DMA module 230 may communicate the quantized frequency coefficients stored in the TCM 204 to the shared memory 232 via the system bus 244. The ME accelerator 212 may acquire the motion reference from the previously decoded frame stored in the external memory 238. For example, the ME accelerator 212 may acquire the motion reference from the previously decoded frame stored in buffer 338 in the external memory 238. While the ME accelerator 212 acquires the previously decoded reference macroblock from the external memory 238, the TQ accelerator 210 may acquire the quantized frequency coefficients from the shared memory 232 and may inverse quantize and inverse discrete cosine transform the quantized frequency coefficients to generate one or more prediction errors. The generated prediction errors may be stored in the shared memory 232.

The ME accelerator 212 may then reconstruct the current macroblock MB0 utilizing the acquired reference from the external memory 238 and the generated prediction errors stored in the shared memory 232. The reconstructed macroblock MB0 may be initially stored in the current memory 236 and may be subsequently stored in the external memory 238 to be utilized as a reference macroblock during the decoding of the subsequent frame.

In an exemplary aspect of the invention, one or more of the ME, TQ, and/or CPU tasks may be scheduled to run simultaneously. For example, the TQ 210 may perform inverse discrete cosine transformation and inverse quantization while the ME accelerator 212 is acquiring the motion reference. The CPU 202 may be adapted to perform VLC decoding for the next macroblock MB1 while the ME accelerator 212 is doing motion compensation and/or storing the reconstructed MB0 in the external memory.

To display the decoded video, the VPP accelerator 208 may also obtain the decoded frame from the external memory and may convert the YUV-formatted data to an RGB format in a line-by-line fashion for subsequent displaying. The RGB-formatted data may be stored in buffer 328 in the OCM 214. After buffer 328 is full with RGB-formatted decoded video information, buffer 328 may be utilized by the DSPI 218 as a read buffer. The DSPI 218 may then acquire the RGB-formatted data in a line-by-line fashion and communicate it to the video display 240 for displaying.

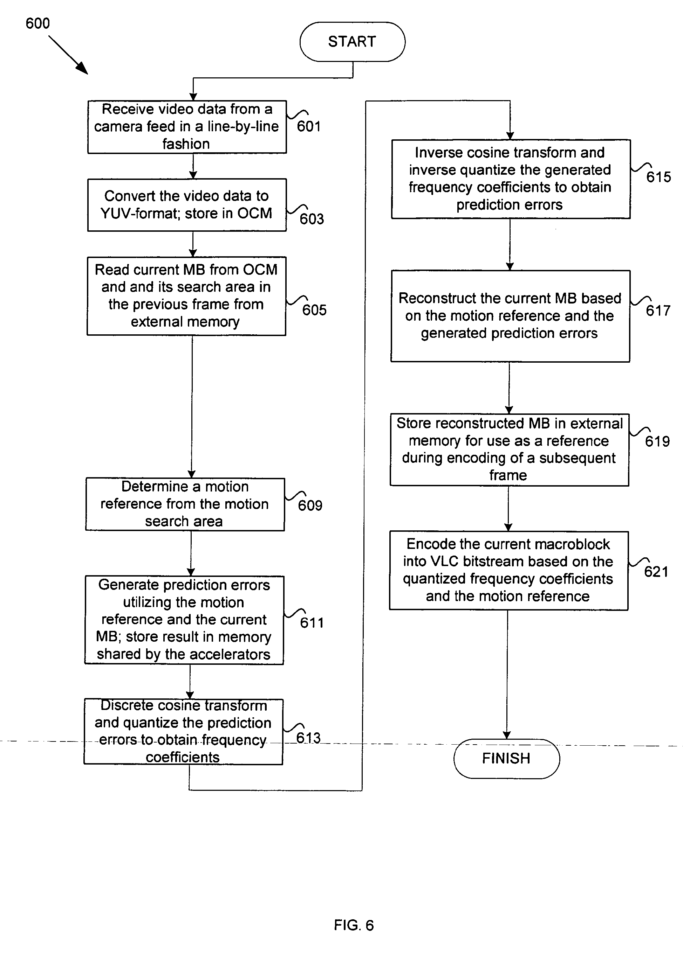

FIG. 6 is a flow diagram of an exemplary method 600 for compression of video information, in accordance with an embodiment of the invention. Referring to FIG. 6, at 601, one or more video lines may be received within a microprocessor from a camera feed. At 603, the video lines from the camera feed may be converted to a YUV format by one or more hardware accelerators within the microprocessor and may be subsequently stored in an on-chip memory (OCM). At 605, a current macroblock may be acquired from the OCM and a corresponding motion search area may be acquired from an external memory, for example. At 609, a motion reference corresponding to a current macroblock may be determined from the acquired motion search area. At 611, one or more prediction errors may be generated based on a difference between the current macroblock and its motion reference. The generated prediction errors may be stored in a memory shared by the hardware accelerators.

At 613, the prediction errors may be discrete cosine transformed and quantized to generate quantized frequency coefficients. At 615, the generated quantized frequency coefficients may be inverse quantized and inverse discrete cosine transformed to generate prediction errors. At 617, the current macroblock may be reconstructed by one or more of the hardware accelerators based on the motion reference and the generated prediction errors. At 619, the reconstructed macroblock may be stored in the external memory and may be utilized as a reference macroblock during encoding of a subsequent frame. At 621, the current macroblock may be encoded into VLC bitstream based on the quantized frequency coefficients and the motion reference.

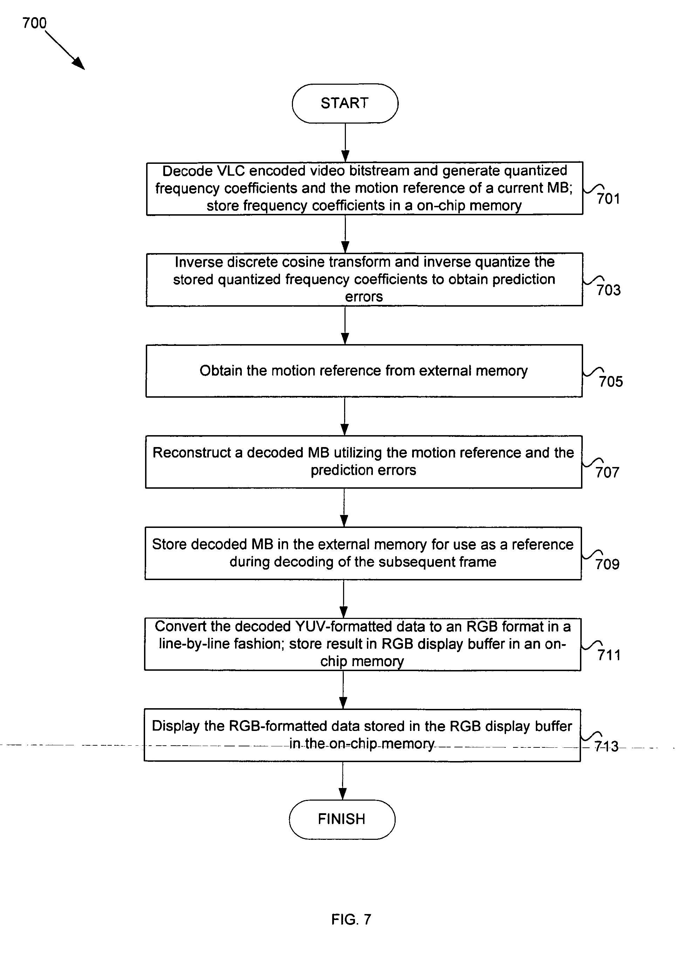

FIG. 7 is a flow diagram of an exemplary method 700 for decompression of video information, in accordance with an embodiment of the invention. Referring to FIG. 7, at 701, a VLC encoded video bitstream may be decoded to generate the motion reference and quantized frequency coefficients of a current macroblock. The generated quantized frequency coefficients may be stored in a first on-chip memory shared by on-chip hardware accelerators. At 703, the stored quantized frequency coefficients may be inverse quantized and inverse discrete cosine transformed to obtain prediction errors. At 705, a motion reference may be acquired from external memory, for example. At 707, a decoded macroblock may be reconstructed utilizing the motion reference and the prediction errors. At 709, the decoded macroblock may be stored in the external memory so that the decoded macroblock may be utilized as a reference during decoding of a subsequent frame. At 711, the decoded YUV-formatted frame may be converted to an RGB format in a line-by-line fashion. The RGB-formatted lines may then be stored in an RGB display buffer in on-chip memory. At 713, the RGB-formatted lines may be communicated from the RGB buffer to a video display for displaying.

Accordingly, aspects of the invention may be realized in hardware, software, firmware or a combination thereof. The invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

Another embodiment of the present invention may be implemented as dedicated circuitry in an ASIC, for example. The dedicated circuitry may be adapted to assist a general-purpose processor and may perform the required processing in the invention. The choice between general-purpose processor or dedicated circuitry for each task in the disclosed method and system may be based on performance and/or cost considerations.

The invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for on-chip processing of video data, the method comprising:
receiving on a chip, a plurality of lines in a current video frame;
storing in a first memory outside said chip, at least a portion of a plurality of previously processed video frames occurring prior to said plurality of lines in said current video frame;
storing at least a portion of said received plurality of lines in said current video frame in a memory on said chip; and
encoding on said chip, a first portion of said received plurality of lines in said current video frame utilizing said stored at least a portion of said plurality of previously processed video frames.

2. The method according to claim 1, further comprising converting said stored at least a portion of said received plurality of lines in said current video frame to YUV format.

3. The method according to claim 1, further comprising transferring a first portion of said plurality of previously processed video frames from said first memory outside said chip to said memory on said chip.

4. The method according to claim 3, further comprising determining at least one prediction error based on a difference between a second portion of said received plurality of lines in said current video frame and a second portion of said plurality of previously processed video frames.

5. A method for on-chip processing of video data, the method comprising:
receiving on a chip, a plurality of encoded macroblocks in a current video frame;
storing in a first memory outside said chip, at least a portion of a plurality of previously decoded video frames occurring prior to said plurality of encoded macroblocks in said current video frame;
storing at least a portion of said received plurality of encoded macroblocks in said current video frame in a memory on said chip; and
decoding on said chip, a first portion of said received plurality of encoded macroblocks in said current video frame utilizing said stored at least a portion of said plurality of previously decoded video frames.

6. The method according to claim 5, further comprising generating at least one quantized frequency coefficient corresponding to said decoded said first portion of said received plurality of encoded macroblocks in said current video frame.

7. A system for on-chip processing of video data, the system comprising:
at least one processor that receives on a chip, a plurality of lines in a current video frame;
said at least one processor stores in a first memory outside said chip, at least a portion of a plurality of previously processed video frames occurring prior to said plurality of lines in said current video frame;
said at least one processor stores at least a portion of said received plurality of lines in said current video frame in a memory on said chip; and
said at least one processor encodes on said chip, a first portion of said received plurality of lines in said current video frame utilizing said stored at least a portion of said plurality of previously processed video frames.

8. The system according to claim 7, wherein said at least one processor converts said stored at least a portion of said received plurality of lines in said current video frame to YUV format.

9. A system for on-chip processing of video data, the system comprising:
at least one processor that receives on a chip, a plurality of encoded macroblocks in a current video frame;
said at least one processor stores in a first memory outside said chip, at least a portion of a plurality of previously decoded video frames occurring prior to said plurality of encoded macroblocks in said current video frame;
said at least one processor stores at least a portion of said received plurality of encoded macroblocks in said current video frame in a memory on said chip; and
said at least one processor decodes on said chip, a first portion of said received plurality of encoded macroblocks in said current video frame utilizing said stored at least a portion of said plurality of previously decoded video frames.

10. The system according to claim 9, wherein said at least one processor generates at least one quantized frequency coefficient corresponding to said decoded said first portion of said received plurality of encoded macroblocks in said current video frame.
